# EUROPÄISCHE PATENTSCHRIFT

(11) **EP 0 394 305 B1**
(45) Veröffentlichungstag und Bekanntmachung des Hinweises auf die Patenterteilung: **31.03.1993**
(21) Anmeldenummer: 89900182.0
(22) Anmeldetag: 01.12.1988
(51) Int. Cl.: G01P 15/08, G01P 15/12

(54) **VORRICHTUNG ZUR MESSUNG VON BESCHLEUNIGUNGEN**
DEVICE FOR MEASURING ACCELERATION
DISPOSITIF DE MESURE DE L'ACCELERATION

(30) Priorität: 03.12.1987 DE 3741036
(43) Veröffentlichungstag der Anmeldung: 31.10.1990
(73) Patentinhaber: FRAUNHOFER-GESELLSCHAFT ZUR FÖRDERUNG DER ANGEWANDTEN FORSCHUNG E.V., 80636 München (DE)
(72) Erfinder: BENECKE, Wolfgang, D-1000 Berlin 30 (DE)
(74) Vertreter: Münich, Wilhelm, Dr.
(86) Internationale Anmeldenummer: DE8800740
(87) Internationale Veröffentlichungsnummer: WO8905459

(56) Entgegenhaltungen:
- EP-A- 0 244 581
- EP-A- 0 301 816
- GB-A- 2 101 336
- New Electronics, Band 19, Nr. 16, August 1986, (London, GB), S. Henley: "Advances in VLSI simulate solid-state sensors market", Seiten 45, 47-50
- Technische Rundschau, Band 79, März 1987, (Bern, CH), E.K. Aschmoneit: "LIGA: Mikrostrukturen, lithographisch hergestellt", Seiten 54-57

## Beschreibung

### Technisches Gebiet

Die vorliegende Erfindung betrifft eine Vorrichtung zur Messung von Beschleunigungen, bei welcher die Wirkung einer Beschleunigung auf eine träge Masse gemessen wird. Insbesondere bezieht sie sich auf eine Vorrichtung, die mit Hilfe der Mikrostrukturtechnik herstellbar ist. Die träge Masse wird bei solchen Vorrichtungen mit den in der Mikrostrukturtechnik üblichen anisotropen Ätzverfahren gefertigt. Die mechanische Wirkung der Beschleunigung wird in ein elektrisches Signal umgewandelt, das einer Auswerteschaltung zugefürt wird.

### Stand der Technik

Mikromechanische, integrierte Beschleunigungssensoren, mit deren Hilfe nicht zwischen Beschleunigungen in den drei Raumachsen unterschieden werden kann, sind in einigen Veröffentlichungen beschrieben. Zum Beispiel: Davison, J.L., Kerns, D.V. "Silicon Acceleration Technology", in: Proceedings of the 1986 International Conference on Industrial Electronics, Control and Instrumentation", IEEE, New York 1986, S. 218 - 222. Die einzelnen Sensoren werden in Planar-Technologie aus Silizium gefertigt. Um Beschleunigungen in den drei Raumachsen messen zu können, müssen drei Einzelsensoren in Hybridmontage angeordnet und aufeinander abgestimmt werden, wodurch die erreichbare mechanische Präzision und der Miniaturisierungsgrad beschränkt werden.

Ein Sensor, der die Abweichung von einer zulässigen Lage (Winkellagenänderung) bestimmt, ist in der EP-A-0 244 581 offenbart. Der Sensor weist zwei in einer Kristalloberfläche integrierte, senkrecht zueinander angeordnete Drehpendel auf, deren Drehpendelachsen beispielsweise in Richtung der x- bzw. der y-Achse eines karthesischen Koordinatensystems weisen. Zur Bestimmung der Abweichung von einer zulässigen Lage in drei Richtungen wird vorgeschlagen, noch ein drittes Pendel in z-Richtung anzuordnen. Da dieses Pendel in einer Ebene integriert wird, die senkrecht auf der gemeinsamen Ebene der ersten beiden Drehpendel steht, können die Pendel nicht gemeinsam hergestellt werden. Zur Herstellung des dritten Pendels sind zusätzliche Verfahrensschritte erforderlich.

In der zur vorliegenden Anmeldung prioritätsälteren aber nicht vorveröffentlichten EP-A-0 301 816 wird ein Beschleunigungsmesser beschrieben, der drei Sensoren aufweist, die in einer Oberfläche integriert sind. Allerdings bestehen die Sensoren aus einseitig befestigten Zungen, deren lose Enden Massen tragen. Die Auslenkung der Zungen wird piezoelektrisch, elektrostatisch oder elektrodynamisch gemessen. Aufgrund der Ausbildung der Sensoren als "Biegebalken" bzw. "Biegezungen" hat der in der EP-A-0 301 816 beschriebene Beschleunigungsmesser jedoch nur eine schwach ausgeprägte Selektivität bzgl. der Bewegungsrichtung. Derartige Sensoren haben nur eine schwach ausgeprägte Selektivität bezüglich der Bewegungsrichtung.

Eine weitere Vorrichtung zur Messung von Beschleunigungen mit Auflösung der drei Raumrichtungen ist aus der englischen Patentanmeldeschrift GB 2 174 500 A bekannt. Bei dieser Vorrichtung sind die Sensorelemente nicht in einer gemeinsamen Kristalloberfläche, sondern auf der Vorder- bzw. Rückseite des Substrats angeordnet. Daraus ergibt sich die schwierige Aufgabe der elektrischen Verknüpfung der verschiedenen Sensorelemente, die in dieser Schrift durch Drahtverbindungen bzw. geätzte Durchgangslöcher mit Leiterbahnen gelöst werden soll. Bei der Herstellung müssen dafür viele Prozeßschritte aufgewendet werden.

Weiterhin ist aus der GB-A-2 101 336 oder der Literaturstelle "New Electronics", 12.08.1986, S. 45-46, eine lediglich in einer Richtung wirksame Vorrichtung zur Messung von Beschleunigungen bekannt, bei der der Sensor einen Torsionsbalken aufweist. Irgendein Hinweis zur Messungen von Beschleunigungen in drei Richtungen ist diesen Druckschriften jedoch nicht zu entnehmen.

### Beschreibung der Erfindung

Aufgabe der Erfindung ist es, eine Vorrichtung zur Messung von Beschleunigungen anzugeben, mit deren Hilfe zwischen Beschleunigungen in den drei Raumachsen unterschieden werden kann, die eine hohe selektive Empfindlichkeit bezüglich der drei Raumachsen aufweist und die mit einer möglichst geringen Zahl von Prozeßschritten herstellbar ist.

Diese Aufgabe wird bei einer gattungsgemäßen Vorrichtung durch die kennzeichnenden Merkmale des Anspruchs 1 gelöst, und durch ein Verfahren zu seiner Herstellung, das im Anspruch 9 gekennzeichnet ist.

Durch die planare Integration von drei Sensorelementen für die drei Raumachsen in einer Kristalloberflächenschicht, wird ein hoher Miniaturisierungsgrad und eine hohe mechanische Präzision erreicht. Gleichzeitig bietet diese Lösung die Möglichkeit, die Sensorelemente mit einem elektronischen Auswerteschaltkreis zu verknüpfen, der auf demselben Substrat integriert werden kann.

Mit der hohen Präzision und den geringen Abmessungen ist die erfindungsgemäße Vorrichtung besonders für die Erfassung mehrdimensionaler Bewegungsabläufe in der Luftfahrt, im Landverkehr, in der Robotik und im biomedizinischen Bereich einsetzbar.

In den abhängigen Patentansprüchen sind vorteilhafte Weiterbildungen der Erfindung gekennzeichnet.

Bei einer Weiterbilding nach Anspruch 2 stehen die Richtungen der Empfindlichkeiten annähernd senkrecht aufeinander stehen. Dadurch kann eine beschleunigende Kraft, die in eine beliebige Raumrichtung wirkt, einfach in die drei senkrechten Komponenten eines vorgebbaren karthesischen Koordinatensystems zerlegt werden.

Besonders vorteilhaft ist eine Ausführung nach Anspruch 3, bei welcher die Rückstellelemente als Torsionsbalken ausgebildet sind, da ein Torsionsbalken mit exzentrisch angebrachter träger Masse auf einfache Weise eine Vorzugsrichtung für die Empfindlichkeit eines Sensors festlegt. In den Ansprüchen 4 und 5 wird eine Ausführung beschrieben, die durch Verwendung von sehr gebräuchlichen Materialien der Halbleiterfertigung zu einer kostengünstigen Herstellung des Beschleunigungsmessers führt.

Eine beschleunigende Kraft führt zur Auslenkung der trägen Masse und damit zu einer mechanischen Spannung im Torsionsbalken, die als Maß für die beschleunigende Kraft herangezogen wird. Nach Anspruch 6 wird die mechanische Spannung in den Torsionsbalken mittels integrierter Widerstände unter Nutzung des piezoresisitiven Effektes in Silizium erfaßt. Diese Ausgestaltung läßt sich mit den üblichen Methoden der Halbleitertechnologie (z.B. Ionenimplantation) verwirklichen. Sie bietet den Vorteil, daß die elektrischen Kontakte der integrierten Widerstände aller Sensorelemente in einer Ebene angeordnet sind. Nach Anspruch 7 wird in derselben Oberfläche ein Schaltkreis zur Auswertung der elektrischen Signale integriert. Die Sensorelemente und der Auswerteschaltkreis können dann durch einfache Leiterbahnen elektrisch miteinander verbunden werden.

Für besonders große Meßempfindlichkeit eignet sich die Ausgestaltung nach Anspruch 8, nach der die mechanische Spannung mittels kapazitiver Signalwandlung indirekt bestimmt wird. Hierzu können beispielsweise Bereiche der Oberflächen der trägen Massen mit Metallschichten versehen werden, die mit unbeweglichen, gegenüberliegend angeordneten Metallplatten Kondensatoren mit variabler Kapazität darstellen. Da die Kapazität dieser Kondensatoren von der Auslenkung der trägen Masse abhängt, stellt sie ein Maß für die beschleunigende Kraft dar.

### Kurze Beschreibung der Zeichnungen

Ein Ausführungsbeispiel wird nachfolgend unter Benutzung der beigefügten Zeichnungen näher erläutert. Zur besseren Veranschaulichung sind die Zeichnungen nicht maßstabsgetreu.

Es zeigen:
- Fig. 1: drei planar monolithisch integrierte Beschleunigungssensoren in schematischer Darstellung der Aufsicht,
- Fig. 2: einen Schnitt durch die in Fig. 1 mit AA' bezeichneten Ebene,
- Fig. 3: eine räumliche Darstellung des in der Ebene AA' geschnittenen Sensorelementes,
- Fig. 4: einen Schnitt durch die in Fig. 1 mit BB' bezeichneten Ebene,
- Fig. 5: einen Schnitt durch die in Fig. 1 mit ZZ' bezeichneten Ebene,
- Fig. 6: einen Schnitt durch die in Fig. 1 mit EE' bezeichneten Ebene und
- Fig. 7: eine schematische Darstellung des Ablaufes des erfindungsgemäßen Herstellungsverfahrens für einen Beschleunigungsmesser gemäß Fig. 1.

### Wege zur Ausführung der Erfindung

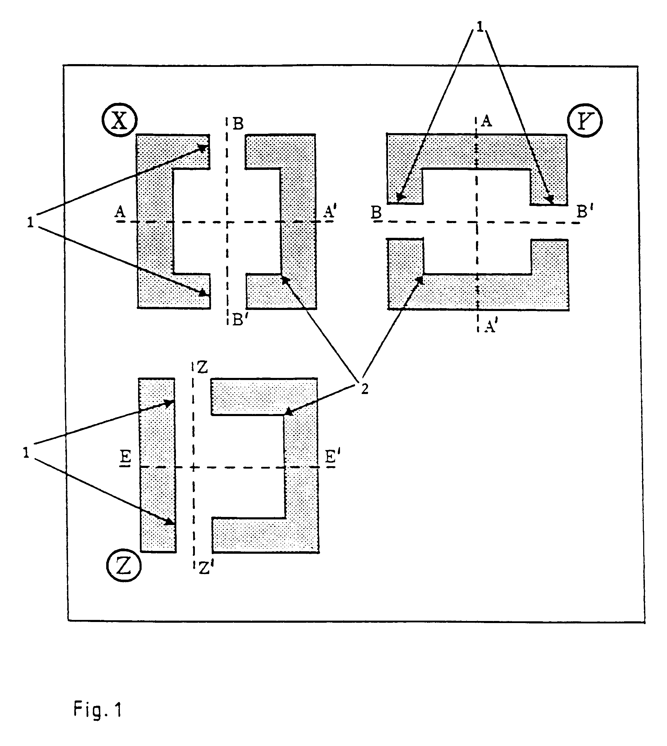

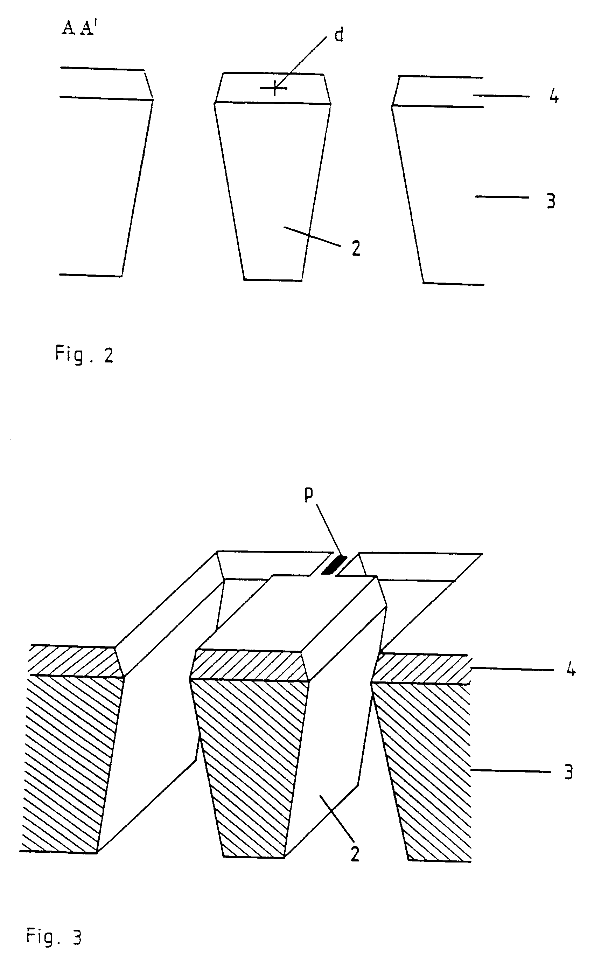

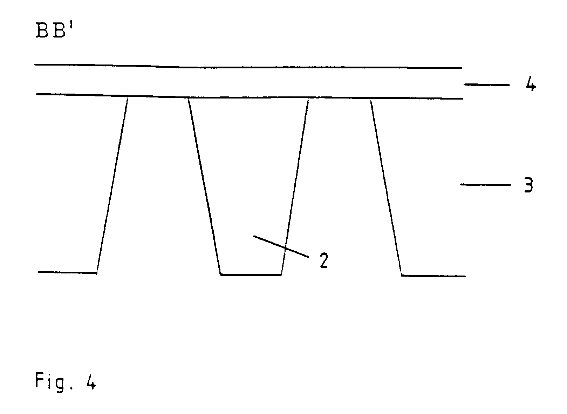

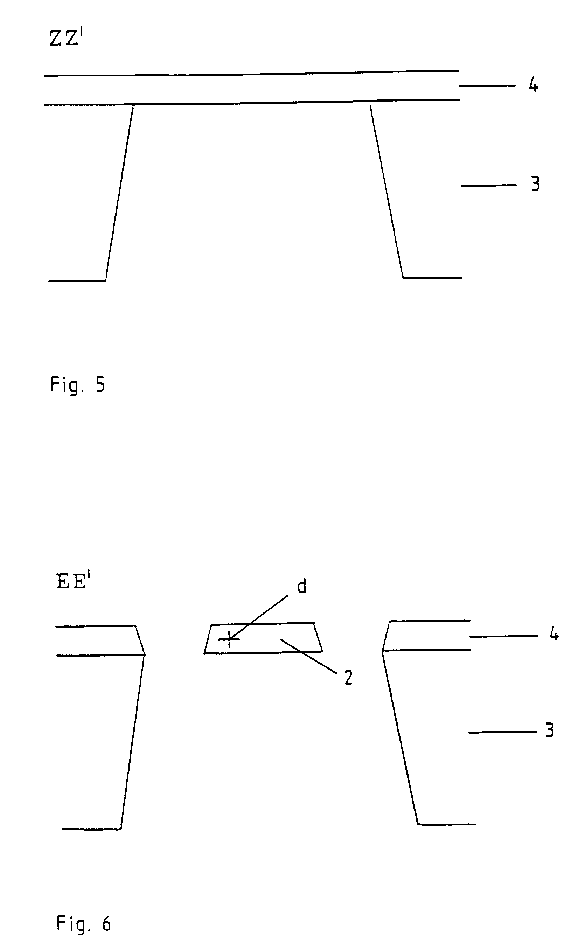

Die erfindungsgemäße Anordnung besteht aus zwei identischen, um 90° gegeneinander verdrehten Sensorelementen, die in Fig. 1 mit X und Y bezeichnet sind und zur Detektion von Beschleunigungen in der Zeichenebene dienen, und einem Sensorelement Z, welches auf Bewegungsänderungen senkrecht zur Zeichenebene reagiert. Jedes Sensorelement setzt sich aus einer trägen Masse, auf welche die beschleunigende Kraft einwirkt einem Rückstellelement und einem Umwandler zur Umwandlung der mechanischen Wirkung in ein elektrisches Signal zusammen. Die Rückstellelemente der drei Sensoren sind Torsionsbalken 1, deren Drehachsen d im Falle der Sensorelemente X und Y in der Schnittebene BB' liegen und im Falle des Sensorelementes Z in der Schnittebene ZZ'. Die Torsionsbalken 1 tragen jeweils eine träge Masse 2, deren Schwerpunkt weit außerhalb der Drehachse d liegt. Die Anordnung der trägen Massen 2 der identischen Sensorelemente X und Y ist in den Schnittzeichnungen Fig. 2, Fig. 3 und Fig. 4 dargestellt und in Fig. 5 und Fig. 6 für das Sensorelement Z, wobei die Schnittebenen entsprechend den Festlegungen in Fig. 1 verlaufen. Die trägen Massen 2 der Sensorelemente X und Y sind aus freigeätzten Teilen des Wafersubstrates 3 und der Epitaxieschicht 4 zusammengesetzt und erstrecken sich über die gesamte Dicke (etwa 500 µm) des Wafers, während die träge Masse des Sensorelementes Z (Fig. 6) nur aus einem freigeätzten Teil der Epitaxieschicht 4 besteht, um eine selektive Empfindlichkeit ausschließlich senkrecht zur Wafer-Oberfläche zu gewährleisten.

Durch die exzentrische Lage des Massenschwerpunktes üben die Massen 2 bei Bewegungsänderungen Drehmomente um die Torsionsachsen d aus. Die wirkenden Drehmomente werden durch Messung der mechanischen Spannungen in den Torsionsbalken 1 bestimmt. Hierzu werden im Bereich der Torsionsbalken mit Hilfe der Ionenimplantation Piezowiderstände P als mechanisch-elektrische Umwandler integriert (Fig. 3).

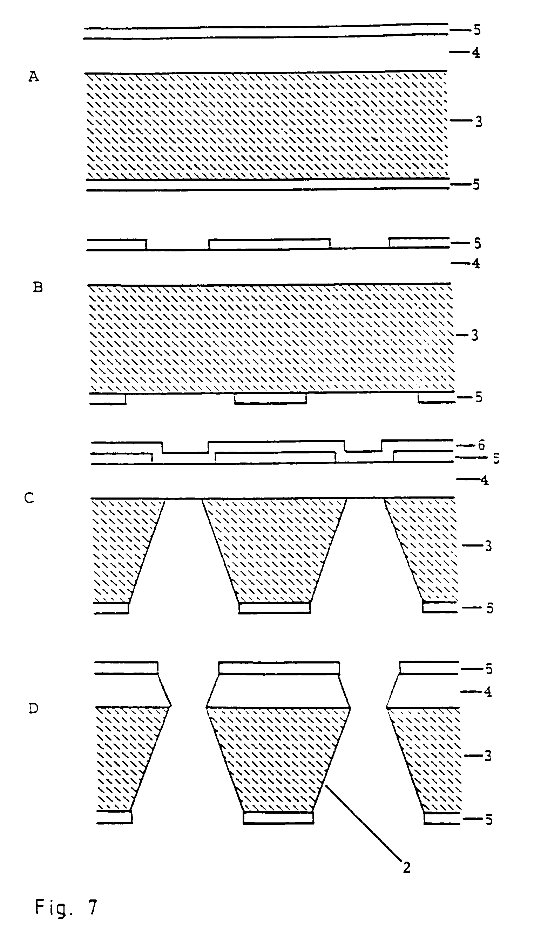

Eine oben beschriebene, mikromechanische, integrierte Anordnung zur Messung von Beschleunigungen ist nach Anspruch 9 durch ein anisotropes Ätzverfahren herstellbar, dessen Ablauf in Fig. 7 Schematisch dargestellt ist. Das Ausgangsmaterial in Fig. 7A besteht aus einem p-dotierten Silizium-Wafer 3 (in 100)-Orientierung, auf dessen Vorderseite eine etwa 10 µm dicke n-Epitaxieschicht 4 und anschließend auf Vorder- und Rückseite passivierenden Schichten 5 aus Silizium-Nitrid abgeschieden werden. Unter Zuhilfenahme der Fotolithographie, der Ionenimplantation und der Diffusion werden auf der Wafer-Vorderseite Piezowiderstände zur Signalwandlung hergetellt. Auf Wafer-Vorder- und Rückseite werden daraufhin mit Hilfe der Fotolithographie die Strukturen der Beschleunigüngssensoren aufgebracht und aus der Passivierungsschicht herausgeätzt Fig. 7B. Die Breite der Torsionsbalken beträgt etwa 60 bis 100 µm, die der Massen einige hundert Mikrometer. Auf die Vorderseite wird eine Metallschicht 6 aufgebracht und der Wafer von der Rückseite her in einer KOH-H₂O Ätzlösung elektrochemisch geätzt, siehe Fig. 7C. Der Ätzvorgang stoppt selbständig am pn-Übergang. Nach beendeter Ätzung wird die Wafer-Rückseite passiviert und die Metallschicht 6 von der Vorderseite entfernt. Eine anisotrope Ätzung der Wafer-Vorderseite 4 vervollständigt die Struktur der Sensorelemente, siehe Fig. 7D. Schließlich werden die Passivierungsschicten 5 der Waferoberflächen entfernt. Mit Hilfe dieses Verfahrens können gleichzeitig mehrere hundert Vorrichtungen zur Messung von Beschleunigungen auf einem Siliziumwafer hergestellt werden.

In einer hier nicht näher beschriebenen Ausgestaltung des Verfahrens werden die Sensorstrukturen mittels Röntgentiefenlithographie und galvanischer Abformung hergestellt.

## Patentansprüche

1. Vorrichtung zur Messung von Beschleunigungen, mit richtungsselektiven Sensoren (X, Y, Z) die jeweils aus einem Torsionsbalken (1) mit einer daran angebrachten trägen Masse (2) und einem mechanisch-elektrischen Umwandler (p) bestehen und mittels mikromechanischer Verfahren herstellbar sind, dadurch **gekennzeichnet**, daß drei jeweils für die Bewegung in einer Richtung empfindliche mikromechanische Sensoren (X, Y, Z) in einer Kristalloberflächenschicht integriert sind, daß die Integration in planarer Technologie erfolgt und daß die drei Richtungen der Empfindlichkeiten der Sensoren in unterschiedliche Richtungen weisen und nicht in einer Ebene liegen.

2. Vorrichtung zur Messung von Beschleunigungen nach Anspruch 1, dadurch **gekennzeichnet**, daß die drei Richtungen der Empfindlichkeiten annähernd senkrecht aufeinander stehen.

3. Vorrichtung zur Messung von Beschleunigungen nach Anspruch 1 oder 2, dadurch **gekennzeichnet**, daß der Schwerpunkt der trägen Masse (2) weit außerhalb der Drehachse des Torsionsbalkens (1) liegt.

4. Vorrichtung zur Messung von Beschleunigungen nach den Ansprüchen 1 bis 3, dadurch **gekennzeichnet**, daß die Torsionsbalken (1) aus Silizium sind.

5. Vorrichtung zur Messung von Beschleunigungen nach den Ansprüchen 1 bis 4, dadurch **gekennzeichnet**, daß das Ausgangsmaterial der Vorrichtung ein Siliziumeinkristall ist.

6. Vorrichtung zur Messung von Beschleunigungen nach einem der Ansprüche 1 bis 5, dadurch **gekennzeichnet**, daß die mechanisch-elektrischen Umwandler als piezoresistive Widerstände ausgebildet sind, die unter Nutzung des piezoresistiven Effektes in Silizium zur Messung mechanischer Spannungen in den Torsionsbalken integriert sind.

7. Vorrichtung zur Messung von Beschleunigungen nach einem der Ansprüche 1 bis 6, dadurch **gekennzeichnet**, daß die Sensorelemente gemeinsam mit einem Auswerteschaltkreis auf derselben Kristalloberfläche integriert sind.

8. Vorrichtung zur Messung von Beschleunigungen nach einem der Ansprüche 1 bis 5, dadurch **gekennzeichnet**, daß die Messung der mechanischen Spannungen in den Torsionsbalken indirekt, mit einer kapazitiven Methode erfolgt.

9. Verfahren zur Herstellung einer Vorrichtung nach einem der Ansprüche 1 bis 8, **gekennzeichnet** durch folgende Verfahrensschritte:
A.
- Abscheiden einer halbleitenden Epitaxieschicht (4) mit Störstellen der einen Art auf einen mit Störstellen der anderen Art dotierten Silizium-Wafer (3) (pn-Übergang),
- Abscheiden einer passivierenden Schicht aus Silizium-Nitriden (5),
- Integration von Piezowiderständen.
B.
- Photolithographische Strukturierung der Wafer-Vorder- und -Rückseite,
- Ätzen der Passivierungsschicht (5).
C.
- Metallisierung der Wafer-Vorderseite (6),
- anisotropes elektrochemisches Ätzen der Wafer-Rückseite in einer KOH-H₂O Ätzlösung, wobei der Ätzvorgang am pn-Übergang selbständig stoppt.
D.
- Passivierung der Wafer-Rückseite,
- Entfernen der Metallisierungsschicht von der Vorderseite,
- anisotropes Ätzen der Epitaxieschicht auf der Wafer-Vorderseite,
- Entfernen der rückseitigen Passivierungsschichten.

10. Verfahren zur Herstellung einer Vorrichtung nach Anspruch 9, dadurch **gekennzeichnet**, daß als passivierende Schicht in Verfahrensschritt A Siliziumoxid abgeschieden wird.

11. Verfahren zur Herstellung einer Vorrichtung nach Anspruch 9, dadurch **gekennzeichnet**, daß die halbleitende Epitaxieschicht in Verfahrensschritt A durch eine Schichtenfolge ersetzt wird, bestehend aus einer hoch-bordotierten p-und einer niedrigdotierten Schicht.

12. Verfahren zur Herstellung eines mikromechanischen, integrierten Beschleunigungsmessers nach Anspruch 9, dadurch **gekennzeichnet**, daß die Sensorstruktur unter Zuhilfenahme von Röntgentiefenlithographie und galvanischer Abformung auf dem Substrat aufgebaut wird.

## Claims

1. Device for measuring acceleration, comprising direction-selective sensors (X, Y, Z) which are each composed of a torsion bar (1) having an inert mass (2) fastened thereto and a mechanico-electrical converter (p), and which are suitable for manufacture by means of micromechanical methods,
**characterized** in that three micromechanical sensors (X, Y, Z) which are each sensitive to the movement in one direction are integrated into a crystal surface layer, that the integration is carried out in a planar technology, and that the three direcions of sensitivity of the sensors are oriented in three different directions and are not located in one plane.

2. Device for measuring acceleration according to Claim 1,
**characterized** in that the three directions of sensitivity are approximately perpendicular to one another.

3. Device for measuring acceleration according to Claim 1 or 2,
**characterized** in that the center of gravity of said inert mass (2) is far outside the axis of rotation of said torsion bar (1).

4. Device for measuring acceleration according to the Claims 1 to 3,
**characterized** in that said torsion bars (1) are made of silicon.

5. Device for measuring acceleration according to Claims 1 to 4,
**characterized** in that the original material of the device is a silicon mono-crystal.

6. Device for measuring acceleration according to any of Claims 1 to 5,
**characterized** in that said mechanico-electrical converters are configured as piezo-resistive resistors which, using the piezoresistive effect in silicon for measuring mechanical stress, are integrated into said torsion bar.

7. Device for measuring acceleration according to any of Claims 1 to 6,
**characterized** in that said sensor elements are integrated on the same crystal surface together with an evaluation circuit.

8. Device for measuring acceleration according to any of Claims 1 to 5,
**characterized** in that the mechanical stress in said torsion bars is measured indirectly by a capacitive method.

9. Method of producing a device according to any of Claims 1 to 8,
**characterized** by the following steps:
A.
- deposition of a semiconductor epitaxial layer (4) having imperfections of a first type on a silicon wafer (3) doped with imperfections of a second type (pn junction),
- deposition of a passivating layer of silicon nitrides (5),
- integration of piezo resistors;
B.
- photolithographic structurization of the front and rear sides of the wafer,
- etching said passivating layer (5);
C.
- metallization of the front side (6) of the wafer,
- anisotropic electrochemical etching of the rear side of the wafer in a KOH-H₂O etching solution, with the etching process automatically stopping at the pn junction;
D.
- passivating the rear side of the wafer,
- removing the metallizing layer from the front side,
- anisotropic etching of the epitaxial layer on the front side of the wafer,
- removing the passivating layers from the rear side.

10. Method of producing a device according to Claim 9,
**characterized** in that silicon oxide is deposited as passivating layer in step A of the operation.

11. Method of producing a device according to Claim 9,
**characterized** in that said semiconductor epitaxial layer in step A is substituted by a succession of layers comprising a high-boron doped p-layer and a low-dope layer.

12. Method of producing a micromechanical integrated accelerometer according to Claim 9,
**characterized** in that the sensor structure is established on the substrate with application of X-ray depth lithography and galvanic moulding.

## Revendications

1. Dispositif de mesure de l'accélération, comprenant des détecteurs sélectifs en vue de direction (X, Y, Z) dont chacun est composé d'une barre à torsion (1) portant une masse (2) y montée et d'un convertisseur mécano-électrique (p) et est apte à être fabriqué au moyens des procédés micromécaniques,
**caractérisé** en ce que trois détecteurs micromécaniques (X, Y, Z), dont chacun est sensitif pour le mouvement dans une direction, sont intégrés dans une couche de surface cristalline, en ce que l'intégration se fait par technique planaire, et en ce que les trois directions de sensitive desdits détecteurs sont dirigées dans des directions différentes et ne se trouvent pas dans un seul plan.

2. Dispose de mesure de l'accélération selon la revendication 1,
**caractérisé** en ce que les trois directions de sensitivité sont approximativement perpendiculaires l'une sur l'autre.

3. Dispositif de mesure de l'accélération selon la revendication 1 ou 2,
**caractérisé** en ce que le centre de gravité de la masse inerte (2) se trouve à loin au dehors de l'axe de rotation de ladite barre à torsion (1).

4. Dispositif de mesure de l'accélération selon une quelconque des revendications 1 à 3,
**caractérisé** en ce que les barres à torsion (1) sont faites de silicium.

5. Dispositif de mesure de l'accélération selon une quelconque des revendications 1 à 4,
**caractérisé** en ce que le matériaux de base pour le dispositif est un monocristal de silicium.

6. Dispositif de mesure de l'accélération selon une quelconque des revendications 1 à 5,
**caractérisé** en ce que lesdits convertisseurs mécano-électriques sont configurés comme résisteurs à piézo-résistance qui sont intégrés dans lesdites barres à torsion pour y mesurer des tensions mécaniques en bénéficiant de l'effet piézo-résistif dans le silicium.

7. Dispositif de mesure de l'accélération selon une quelconque des revendications 1 à 6,
**caractérisé** en ce que les éléments détecteurs sont intégrés, en commun avec un circuit d'évaluation, sur la même surface cristalline.

8. Dispositif de mesure de l'accélération selon une quelconque des revendications 1 à 5,
**caractérisé** en ce que les tensions mécaniques dans les barres à torsion sont mesurées indirectement, moyennant une méthode capacitive.

9. Procédé de fabriquer un dispositif selon une quelconque des revendications 1 à 8,
**caractérisé** par les opérations suivantes:
A.
- déposer une couche épitaxiale semiconductrice (4) à imperfections d'un premier type sur une galette (3) en silicium (jonction p-n) dopée par des imperfections d'un deuxième type,
- déposer une couche passivante en nitrures de silicium (5),
- intégrer des piézo-résisteurs;
B.
- structurer les faces avant et arrière d'une galette par un processus photolithographique,
- graver ladite couche passivante (5);
C.
- métalliser la face avant (6) de la galette,
- graver la face arrière de la galette par un processus anisotrope électrochimique dans une solution de gravure à KOH-H₂O, le processus de gravure s'arrêtant automatiquement à la jonction p-n;
D.
- rendre la face arrière de la galette passive,
- enlever la couche de métallisation de la face avant,
- gravure anisotrope de ladite couche épitaxiale sur la face avant de la galette,
- enlever les couches passivantes de la face arrière.

10. Procédé de fabriquer un dispositif selon la revendication 9,
**caractérisé** en ce que l'oxyde de silicium et déposé comme couche passivante dans l'opération A.

11. Procédé de fabriquer un dispositif selon la revendication **9,**
**caractérisé** en ce que ladite couche épitaxiale semiconductrice dans l'opération A est remplacée par une succession des couches qui est composé d'une couche à haut dopage en bore du type p et d'une couche à bas dopage.

12. Procédé de fabriquer un accéléromètre micromécanique intégré selon la revendication 9,
**caractérisé** en ce que la structure des détecteurs est établie sur le substrat au moyen des processus de lithographie à profondeur aux rayons X et de moulage galvanique.
